# EUROPÄISCHE PATENTANMELDUNG

(11) **EP 2 365 730 A1**
(43) Veröffentlichungstag der Anmeldung: **14.09.2011**
(21) Anmeldenummer: 10155181.0
(22) Anmeldetag: 02.03.2010
(51) Int. Cl.: H05B 3/84

(54) **Scheibe mit einem elektrischen Anschlusselement**

(62) Teilanmeldung aus: 10157516.5
(71) Anmelder: Saint-Gobain Glass France, 92400 Courbevoie (FR)
(72) Erfinder: Rateiczak, Mitja, 52146 Würselen (DE); Reul, Bernhard, 52134 Herzogenrath (DE); Ziegler, Stefan, 52074 Aachen (DE)
(74) Vertreter: Lendvai, Tomas

(57) **Zusammenfassung**

Die vorliegende Erfindung betrifft eine Scheibe mit einem elektrischen Anschlusselement, umfassend:
- ein Substrat aus Glas (1) mit einem ersten thermischen Ausdehnungskoeffizienten,
- eine elektrisch leitfähige Struktur (2) mit einer Schichtdicke von 5 µm bis 40 µm auf einem Bereich des Substrats (1),
- ein Anschlusselement (3) mit einem zweiten thermischen Ausdehnungs-koeffizienten, wobei die Differenz zwischen dem ersten und dem zweiten Ausdehnungskoeffizienten < 5 x 10⁻⁶/°C ist,
- eine Schicht einer Lotmasse (4), die das Anschlusselement (3) mit Teilbereichen der elektrisch leitfähigen Struktur (2) elektrisch verbindet, wobei die Lotmasse (4) die eine Schichtdicke t von 50 µm übersteigt mit einer Austrittsbreite b von < 1 mm, bezogen auf die Kontaktfläche des Anschlusselements (3), aus dem Zwischenraum zwischen dem Anschlusselement (3) und der elektrisch leitfähiger Struktur (2) austritt.

## Beschreibung

Die Erfindung betrifft eine Scheibe mit einem elektrischen Anschlusselement und ein wirtschaftliches und umweltfreundliches Verfahren zu deren Herstellung.

Die Erfindung betrifft weiter eine Scheibe mit einem elektrischen Anschlusselement für Fahrzeuge mit elektrisch leitfähigen Strukturen wie beispielsweise Heizleiter oder Antennenleiter. Die elektrisch leitfähigen Strukturen sind üblicherweise über angelötete elektrische Anschlusselemente mit der Bordelektrik verbunden. Aufgrund unterschiedlicher thermischer Ausdehnungskoeffizienten der verwendeten Materialien treten mechanische Spannungen bei der Herstellung und im Betrieb auf welche die Scheiben belasten und den Bruch der Scheibe hervorrufen können.

Bleihaltige Lote weisen eine hohe Duktilität auf, die auftretende mechanische Spannungen zwischen elektrischem Anschlusselement und der Scheibe durch plastische Deformierung kompensieren können. Allerdings müssen aufgrund der Altauto―Richtlinie 2000/53/EG innerhalb der EG bleihaltige Lote durch bleifreie Lote ersetzt werden. Die Richtlinie wird zusammenfassend mit dem Kürzel ELV (End of life vehicles) bezeichnet. Das Ziel ist dabei, im Zuge der massiven Ausweitung von Wegwerfelektronik äußerst problematische Bestandteile aus den Produkten zu verbannen. Die betroffen Substanzen sind Blei, Quecksilber, Cadmium und Chrom. Das betrifft unter anderem die Durchsetzung von bleifreien Lötmitteln in elektrischen Anwendungen auf Glas und die Einführung entsprechender Ersatzprodukte hierzu.

EP 1 942 703 A2 offenbart ein elektrisches Anschlusselement an Scheiben von Fahrzeugen, wobei die Differenz der thermischen Ausdehnungskoeffizienten von Scheibe und elektrischem Anschlusselement < 5 x 10⁻⁶/°C beträgt. Um eine ausreichende mechanische Stabilität und Prozessierbarkeit zu ermöglichen wird vorgeschlagen einen Lotmassenüberschuss zu verwenden. Der Überschuss an Lotmasse tritt aus dem Zwischenraum zwischen dem Anschlusselement und elektrisch leitfähiger Struktur heraus. Der Überschuss an Lotmasse verursacht hohe mechanische Spannungen in der Glasscheibe. Diese mechanischen Spannungen führen schließlich zum Bruch der Scheibe.

Die Aufgabe der vorliegenden Erfindung ist es, eine Scheibe mit einem elektrischen Anschlusselement und ein wirtschaftliches und umweltfreundliches Verfahren zu deren Herstellung bereitzustellen, wobei kritische mechanische Spannungen in der Scheibe vermieden werden.

Die Aufgabe der vorliegenden Erfindung wird durch eine Scheibe mit einem Anschlusselement gelöst, das die folgende Merkmale umfasst:
- ein Substrat aus Glas mit einem ersten thermischen Ausdehnungskoeffizienten,
- eine elektrisch leitfähige Struktur mit einer Schichtdicke von 5 µm bis 40 µm, bevorzugt 5 µm bis 20 µm, auf einem Bereich des Substrats,
- ein Anschlusselement mit einem zweiten thermischen Ausdehnungskoeffizienten, wobei die Differenz zwischen dem ersten und dem zweiten Ausdehnungskoeffizienten < 5 x 10⁻⁶/°C ist und
- eine Schicht einer Lotmasse, die das Anschlusselement mit Teilbereichen der elektrisch leitfähigen Struktur elektrisch verbindet, wobei die Lotmasse mit einer Austrittsbreite von < 1 mm, bezogen auf die Kontaktfläche des Anschlusselements, aus dem Zwischenraum zwischen dem Anschlusselement und der elektrisch leitfähiger Struktur austritt.

Die Aufgabe der vorliegenden Erfindung weiter wird durch eine Scheibe mit einem Anschlusselement gelöst, das die folgenden Merkmale umfasst:
- ein Substrat aus Glas (1) mit einem ersten thermischen Ausdehnungskoeffizienten,
- eine elektrisch leitfähige Struktur (2) mit einer Schichtdicke von 5 µm bis 40 µm, bevorzugt 5 µm bis 20 µm, auf einem Bereich des Substrats (1),
- ein Anschlusselement (3) mit einem zweiten thermischen Ausdehnungskoeffizienten, wobei die Differenz zwischen dem ersten und dem zweiten Ausdehnungs-koeffizienten ≥ x 10⁻⁶/°C ist und
- eine Schicht einer Lotmasse (4), die das Anschlusselement (3) mit Teilbereichen der elektrisch leitfähigen Struktur (2) elektrisch verbindet.

Auf der Scheibe ist eine elektrisch leitfähige Struktur aufgebracht. Ein elektrisches Anschlusselement ist mit einer Lotmasse auf Teilbereichen mit der elektrisch leitfähigen Struktur elektrisch verbunden. Die Lotmasse tritt mit einer Austrittsbreite von < 1 mm aus dem Zwischenraum zwischen dem Anschlusselement und der elektrisch leitfähigen Struktur aus.

In einer bevorzugten Ausgestaltung ist die maximale Austrittsbreite bevorzugt kleiner 0,5 mm und insbesondere etwa 0 mm. Die maximale Austrittsbreite kann auch negativ sein, also in den von elektrischem Anschlusselement und elektrisch leitfähiger Struktur gebildeten Zwischenraum zurückgezogen sein, bevorzugt in einem konkaven Meniskus.

Die maximale Austrittsbreite ist definiert als der Abstand zwischen den Außenkanten des Anschlusselementes und der Stelle des Lotmasseübertritts, an dem die Lotmasse eine Schichtdicke von 50 µm unterschreitet.

Der Vorteil liegt in der Reduzierung der mechanischen Spannungen in der Scheibe, insbesondere im kritischen Bereich der bei einem großen Lotmasseübertritts vorliegt.

Der erste thermische Ausdehnungskoeffizient ist bevorzugt von 8 x 10⁻⁶/°C bis 9 x 10⁻⁶/°C. Das Substrat ist bevorzugt Glas, das bevorzugt einen thermischen Ausdehnungskoeffizienten von 8,3 x 10⁻⁶/°C bis 9 x 10⁻⁶/°C in einem Temperaturbereich von 0 °C bis 300 °C aufweist.

Der zweite thermische Ausdehnungskoeffizient ist bevorzugt von 8 x 10⁻⁶/°C bis 9 x 10⁻⁶/°C, besonders bevorzugt von 8,3 x 10⁻⁶/°C bis 9 x 10⁻⁶/°C in einem Temperaturbereich von 0 °C bis 300 °C.

Der thermische Ausdehnungskoeffizient des Anschlusselements kann ≤ 4 x 10⁻⁶/°C betragen.

Die erfindungsgemäße elektrisch leitfähige Struktur weist bevorzugt eine Schichtdicke von 8 µm bis 15 µm, besonders bevorzugt von 10 µm bis 12 µm auf. Die erfindungsgemäße elektrisch leitfähige Struktur enthält bevorzugt Silber, besonders bevorzugt Silberpartikel und Glasfritten.

Die erfindungsgemäße Schichtdicke des Lots ist < 3.0 x 10⁻⁴ m. Die erfindungsgemäße Lotmasse enthält bevorzugt Zinn und Wismut, Indium, Zink, Kupfer, Silber oder Zusammensetzungen davon. Der Anteil an Zinn in der erfindungsgemäßen Lotzusammensetzung beträgt von 3 Gew.-% bis 99,5 Gew.-%, bevorzugt von 10 Gew.-% bis 95,5 Gew.-%, besonders bevorzugt von 15 Gew.-% bis 60 Gew.-%. Der Anteil an Wismut, Indium, Zink, Kupfer, Silber oder Zusammensetzungen davon beträgt in der erfindungsgemäßen Lotzusammensetzung von 0,5 Gew.-% bis 97 Gew.-%, bevorzugt 10 Gew.-% bis 67 Gew.-%. Die erfindungsgemäße Lotzusammensetzung enthält ganz besonders bevorzugt Bi40Sn57Ag3, Sn40Bi57Ag3, Bi59Sn40Ag1, Bi57Sn42Ag1, In97Ag3, Sn95,5Ag3,8Cu0,7, Bi67ln33, Bi33ln50Sn17, Sn77,2ln20Ag2,8 oder Gemische davon.

Das erfindungsgemäße Anschlusselement enthält bevorzugt zumindest 50 Gew.-% bis 75 Gew.-% Eisen, 25 Gew.-% bis 50 Gew.-% Nickel, 0 Gew.-% bis 20 Gew.-% Kobalt, 0 Gew.-% bis 1,5 Gew.-% Magnesium, 0 Gew.-% bis 1 Gew.-% Silizium, 0 Gew.-% bis 1 Gew.-% Kohlenstoff oder 0 Gew.-% bis 1 Gew.-% Mangan.

Das erfindungsgemäße Anschlusselement enthält bevorzugt zumindest 55 Gew.-% bis 70 Gew.-% Eisen, 30 Gew.-% bis 45 Gew.-% Nickel, 0 Gew.-% bis 5 Gew.-% Kobalt, 0 Gew.-% bis 1 Gew.-% Magnesium, 0 Gew.-% bis 1 Gew.-% Silizium oder 0 Gew.-% bis 1 Gew.-% Kohlenstoff.

Das erfindungsgemäße Anschlusselement enthält weiter bevorzugt zumindest 50 Gew.-% bis 60 Gew.-% Eisen, 25 Gew.-% bis 35 Gew.-% Nickel, 15 Gew.-% bis 20 Gew.-% Kobalt, 0 Gew.-% bis 0,5 Gew.-% Silizium, 0 Gew.-% bis 0,1 Gew.-% Kohlenstoff oder 0 Gew.-% bis 0,5 Gew.-% Mangan.

Das erfindungsgemäße Anschlusselement ist besonders bevorzugt mit Nickel, Zinn, Kupfer und / oder Silber beschichtet. Das erfindungsgemäße Anschlusselement ist ganz besonders bevorzugt mit 0,1 µm bis 0,3 µm Nickel und / oder 3 µm bis 10 µm Silber beschichtet. Das Anschlusselement kann vernickelt, verzinnt, verkupfert und / oder versilbert werden. Ni und Ag verbessern die Stromtragfähigkeit und Korrosionsstabilität des Anschlusselements und die Benetzung mit der Lotmasse.

Das erfindungsgemäße Anschlusselement enthält bevorzugt Kovar (FeCoNi) und/oder Invar (FeNi) mit einem thermischen Ausdehnungskoeffizienten von Invar von 0,1 x 10⁻⁶/°C bis 4 x 10⁻⁶/°C oder eine maximale Differenz von Kovar von 5 x 10⁻⁶/°C zum Ausdehnungskoeffizienten der Scheibe.

Kovar ist eine Eisen-Nickel-Kobalt Legierung, die Wärmeausdehnungskoeffizienten von üblicherweise etwa 5 x 10⁻⁶/°C aufweist, der damit geringer als der Koeffizient typischer Metalle ist. Die Zusammensetzung enthält beispielsweise 54 Gew.-% Eisen, 29 Gew.-% Nickel und 17 Gew.-% Kobalt. Im Bereich der Mikroelektronik und Mikrosystemtechnik wird deshalb Kovar als Gehäusewerkstoff oder als Submount eingesetzt. Submounts liegen nach dem Sandwichprinzip zwischen dem eigentlichen Trägermaterial und dem Material mit meistens deutlich größerem Ausdehnungskoeffizienten. Kovar dient somit als ausgleichendes Element, welches die durch die unterschiedlichen Wärmeausdehnungskoeffizienten der anderen Materialien verursachten thermomechanischen Spannungen aufnimmt und verringert. In gleicher Weise dient Kovar für Metall-Glas-Durchführungen von elektronischen Bauelementen, Materialübergängen in Vakuumkammern.

Invar ist eine Eisen-Nickel-Legierung mit einem Gehalt von 36 Gew.-% Nickel (FeNi36). Es ist eine Gruppe von Legierungen und Verbindungen, welche die Eigenschaft aufweisen, in bestimmten Temperaturbereichen anomal kleine oder zum Teil negative Wärmeausdehnungskoeffizienten zu haben. Fe65Ni35 Invar enthält 65 Gew.-% Eisen und 35 Gew.-% Nickel. Bis zu 1 Gew.-% Magnesium, Silizium und Kohlenstoff werden üblicherweise legiert, um die mechanischen Eigenschaften zu verändern. Durch Legieren von 5 Gew.-% Kobalt kann der thermische Ausdehnungskoeffizient α weiter reduziert werden. Eine Bezeichnung für die Legierung ist Inovco, FeNi33Co4.5 mit einem Ausdehnungskoeffizienten α (20 °C bis 100 °C) von 0,55 x 10⁻⁶/°C.

Wird eine Legierung wie Invar mit einem sehr geringen absoluten thermischen Ausdehnungskoeffizienten von < 4 x 10⁻⁶/°C verwendet findet eine Überkompensation der mechanischen Spannungen durch unkritische Druckspannungen im Glas oder durch unkritische Zugspannungen in der Legierung statt. Aufgrund der Überkompensation der Legierung ist die Austrittsbreite aus dem Zwischenraum zwischen dem Anschlusselement und der elektrisch leitfähigen Struktur unerheblich.

Kovar und/oder Invar können auch als Ausgleichsplatte auf ein Anschlusselement aus beispielsweise Stahl, Aluminium, Titan, Kupfer angeschweißt, gecrimpt oder geklebt werden. Als Bimetall kann ein günstiges Ausdehnungsverhalten des Anschlusselementes relativ zur Glasausdehnung erzielt werden. Die Ausgleichsplatte ist bevorzugt hutförmig.

Das elektrische Anschlusselement enthält auf der zur Lotmasse ausgerichteten Fläche eine Beschichtung die Kupfer, Zink, Zinn, Silber, Gold oder Kombination davon, bevorzugt Silber enthält. Dadurch wurde eine Ausbreitung der Lotmasse über die Beschichtung hinweg verhindert und die Austrittsbreite begrenzt.

Das elektrische Anschlusselement kann in Brückenform mit mindestens zwei Kontaktflächen, aber auch als Anschlusselement mit einer Kontaktfläche ausgestaltet sein.

Die Anschlusselemente sind in der Draufsicht beispielsweise bevorzugt 1 mm bis 50 mm lang und breit und besonders bevorzugt 3 mm bis 30 mm lang und breit und ganz besonders bevorzugt 2 mm bis 4 mm breit und 12 mm bis 24 mm lang.

Die Form des elektrischen Anschlusselementes kann Lotdepots im Zwischenraum von Anschlusselement und elektrisch leitfähiger Struktur ausbilden. Die Lotdepots und Benetzungseigenschaften des Lotes am Anschlusselement verhindern den Austritt der Lotmasse aus dem Zwischenraum. Lotdepots können rechtwinklig, verrundet oder polygonal ausgestaltet sein.

Die Verteilung der Lotwärme und damit die Verteilung der Lotmasse im Lötvorgang kann durch die Form des Anschlusselementes definiert werden. Lotmasse fließt zum wärmsten Punkt. Beispielsweise kann die Brücke eine Einfach- oder Doppelhutform aufweisen um die Wärme während des Lötvorgangs vorteilhaft im Anschlusselement zu verteilen.

Das Einbringen der Energie beim elektrischen Verbinden von elektrischem Anschlusselement und elektrisch leitfähiger Struktur erfolgt bevorzugt mit Stempel, Thermoden, Kolbenlöten, bevorzugt Laserlöten, Heißluftlöten, Induktionslöten, Widerstandslöten und/oder mit Ultraschall.

Die Aufgabe der Erfindung wird weiter durch ein Verfahren zur Herstellung einer Scheibe mit einem Anschlusselement gelöst, wobei
a) Lotmasse auf dem Anschlusselement als Plättchen mit festgelegter Schichtdicke, Volumen, Form und Anordnung angeordnet und aufgebracht wird,
b) Elektrisch leitfähige Struktur auf einem Substrat aufgebracht wird,
c) das Anschlusselement mit der Lotmasse auf der elektrisch leitfähigen Struktur anordnet wird und
d) das Anschlusselement mit der elektrisch leitfähigen Struktur verlötet wird.

Die Lotmasse wird bevorzugt vorher auf die Anschlusselemente appliziert, bevorzugt als Plättchen mit festgelegter Schichtdicke, Volumen, Form und Anordnung auf dem Anschlusselement.

Das Anschlusselement wird mit einem nicht dargestelltem Blech, Litze, Geflecht aus beispielsweise Kupfer verschweißt oder gecrimpt und mit der ebenfalls nicht dargestellten Bordelektrik verbunden.

Das Anschlusselement wird bevorzugt in Heizscheiben oder in Scheiben mit Antennen in Gebäuden, insbesondere in Automobilen, Eisenbahnen, Flugzeugen oder Seefahrzeugen benutzt. Das Anschlusselement dient dazu, die leitenden Strukturen der Scheibe mit elektrischen Systemen zu verbinden, welche außerhalb der Scheibe angeordnet sind. Die elektrischen Systeme sind Verstärker, Steuereinheiten oder Spannungsquellen.

Die Erfindung wird anhand einer Zeichnung und Ausführungsbeispielen näher erläutert. Es zeigen:
Fig. 1 eine perspektivische Darstellung einer ersten Ausgestaltung der erfindungsgemäßen Scheibe,
Fig. 2 einen Schnitt A-A durch die Scheibe gemäß der Figur 1,
Fig. 3 einen Schnitt durch eine alternative erfindungsgemäße Scheibe,
Fig. 4 einen Schnitt durch eine weitere alternative erfindungsgemäße Scheibe,
Fig. 5 einen Schnitt durch eine weitere alternative erfindungsgemäße Scheibe,
Fig. 6 eine perspektivische Darstellung einer alternativen Ausgestaltung der erfindungsgemäßen Scheibe,
Fig. 7 einen Schnitt B-B durch die Scheibe gemäß der Figur 6 und
Fig. 8 ein detailliertes Flussdiagramm des erfindungsgemäßen Verfahrens.

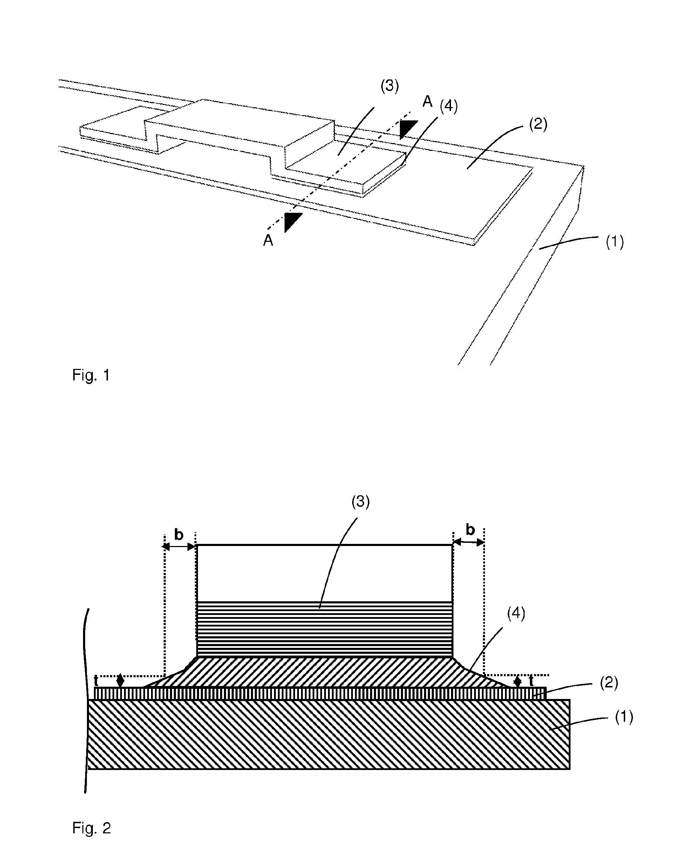

Fig.1 und Fig. 2 zeigen je ein Detail einer erfindungsgemäßen beheizbaren Scheibe 1 im Bereich des elektrischen Anschlusselementes 3. Die Scheibe 1 war ein 3 mm dickes thermisch vorgespanntes Einscheibensicherheitsglas aus Natron-Kalk-Glas. Die Scheibe 1 wies eine Breite von 150 cm und eine Höhe von 80 cm auf. Auf der Scheibe 1 war eine elektrisch leitfähige Struktur 2 in Form einer Heizleiterstruktur 2 aufgedruckt. Die elektrisch leitfähige Struktur 2 enthielt Silberpartikel und Glasfritten. Im Randbereich der Scheibe 1 war die elektrisch leitfähige Struktur 2 auf eine Breite von 10 mm verbreitert und bildete eine Kontaktfläche für das elektrische Anschlusselement 3. Im Randbereich der Scheibe 1 befand sich weiter ein nicht dargestellter Abdecksiebdruck. Im Bereich der Kontaktfläche zwischen dem elektrischen Anschlusselement 3 und der elektrisch leitfähigen Struktur 2 war Lotmasse 4 aufgebracht, die eine dauerhafte elektrische und mechanische Verbindung zwischen dem elektrischen Anschlusselement 3 und der elektrisch leitfähigen Struktur 2 bewirkte. Die Lotmasse 4 enthielt 40 Gew.-% Wismut, 57 Gew.-% Zinn und 3 Gew.-% Silber. Die Lotmasse 4 war durch ein vorgegebenes Volumen und Form vollständig zwischen dem elektrischen Anschlusselement 3 und der elektrisch leitfähigen Struktur 2 angeordnet. Die Lotmasse 4 hatte eine Dicke von 250 µm. Ein Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde auf einer maximalen Austrittsbreite von b = 0,5 mm beobachtet. Das elektrische Anschlusselement 3 war eine Legierung die 54 Gew.-% Eisen, 29 Gew.-% Nickel und 17 Gew.-% Kobalt enthielt. Das elektrische Anschlusselement 3 war brückenförmig ausgestaltet und hatte eine Breite von 4 mm und eine Länge von 24 mm. Die Materialdicke des Anschlusselementes 3 betrug 0,8 mm. Die Kontaktfläche des Anschlusselements 3 wies eine Breite von 4 mm und eine Länge von 4 mm auf. Durch die Anordnung der Lotmasse 4, vorgegeben durch das Anschlusselement 3 und die elektrisch leitfähige Struktur 2, wurden keine kritischen mechanischen Spannungen in der Scheibe 1 beobachtet. Die Verbindung der Scheibe 1 mit dem elektrischen Anschlusselement 3 war über die elektrisch leitfähige Struktur 2 dauerhaft stabil.

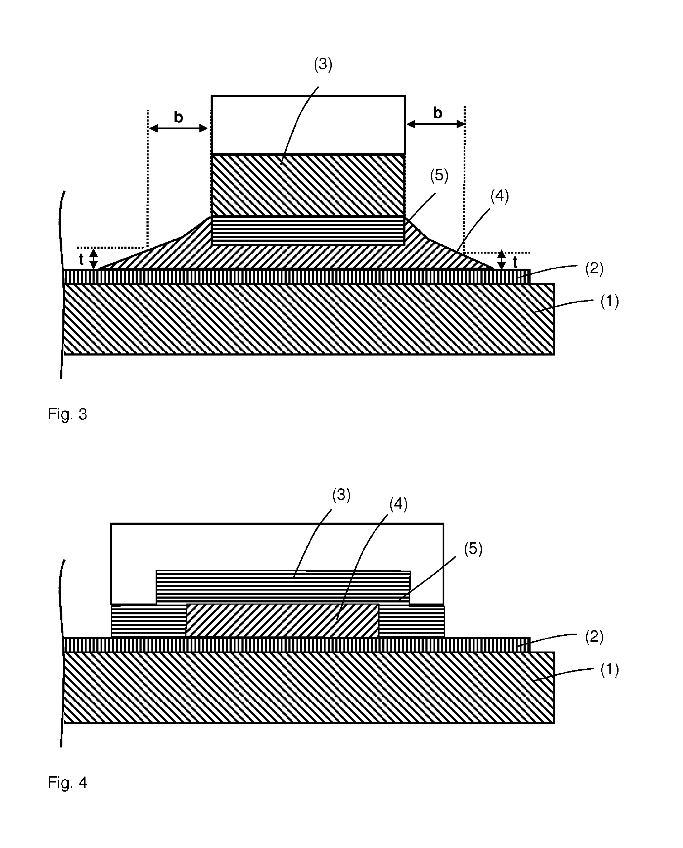

Fig. 3 zeigt in Fortführung des Ausführungsbeispiels der Figuren 1 und 2 eine alternative Ausgestaltung des erfindungsgemäßen Anschlusselementes 3. Das elektrische Anschlusselement 3 war auf der zur Lotmasse 4 hin ausgerichteten Fläche mit einer silberhaltigen Beschichtung 5 versehen. Dadurch wurde eine Ausbreitung der Lotmasse über die Beschichtung 5 hinweg verhindert und die Austrittsbreite b begrenzt. Die Austrittsbreite b der Lotmasse 4 war unterhalb von 1 mm. Aufgrund der Anordnung der Lotmasse 4 wurden keine kritischen mechanischen Spannungen in der Scheibe 1 beobachtet. Die Verbindung der Scheibe 1 mit dem elektrischen Anschlusselement 3 war über die elektrisch leitfähige Struktur 2 dauerhaft stabil.

Fig. 4 zeigt in Fortführung des Ausführungsbeispiels der Figuren 1 und 2 eine weitere alternative Ausgestaltung des erfindungsgemäßen Anschlusselementes 3. Das elektrische Anschlusselement 3 enthielt auf der zur Lotmasse 4 hin ausgerichteten Fläche eine Aussparung mit einer Tiefe von 250 µm, die ein Lotdepot für die Lotmasse 4 bildete. Ein Austritt der Lotmasse 4 aus dem Zwischenraum konnte vollständig verhindert werden. Die thermischen Spannungen in der Scheibe 1 waren unkritisch und es wurde eine dauerhafte elektrische und mechanische Verbindung zwischen den Anschlusselement 3 und der Scheibe 1 über die elektrisch leitfähige Struktur 2 bereitgestellt.

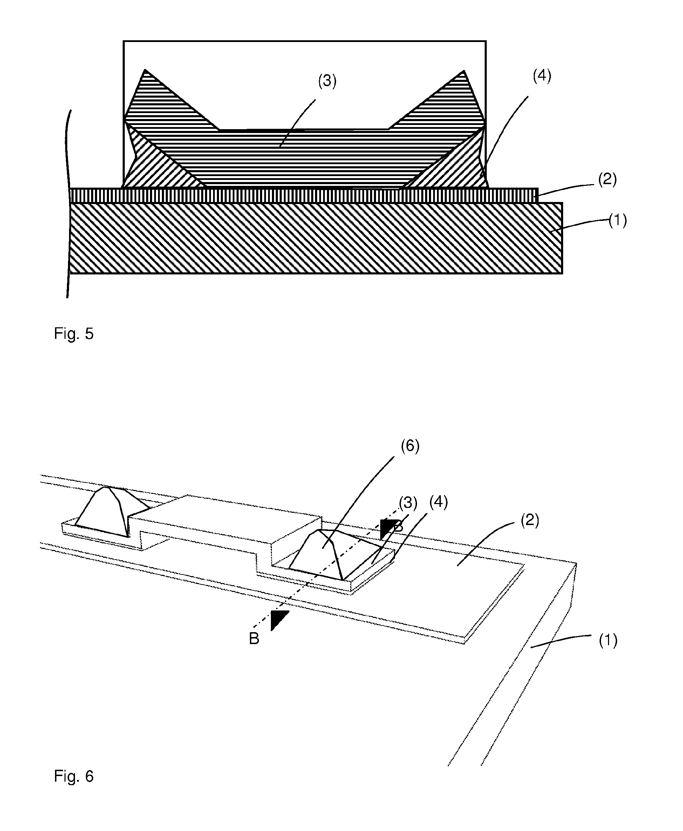

Fig. 5 zeigt in Fortführung des Ausführungsbeispiels der Figuren 1 und 2 eine weitere alternative Ausgestaltung des erfindungsgemäßen Anschlusselementes 3. Das elektrische Anschlusselement 3 war an den Randbereichen aufgebogen. Die Höhe der Aufbiegung der Randbereiche von der Glasscheibe 1 betrug maximal 400 µm. Dadurch wurde ein Raum für die Lotmasse 4 gebildet. Die vorgegebene Lotmasse 4 bildete zwischen dem elektrischen Anschlusselement 3 und der elektrisch leitfähigen Struktur 2 einen konkaven Meniskus. Ein Austritt von Lotmasse 4 aus dem Zwischenraum konnte vollständig verhindert werden. Die Austrittsbreite b war in etwa 0, größtenteils aufgrund des gebildeten Meniskus unterhalb von null. Die thermischen Spannungen in der Scheibe 1 waren unkritisch und es wurde eine dauerhafte elektrische und mechanische Verbindung zwischen dem Anschlusselement 3 und der Scheibe 1 über die elektrisch leitfähige Struktur 2 bereitgestellt.

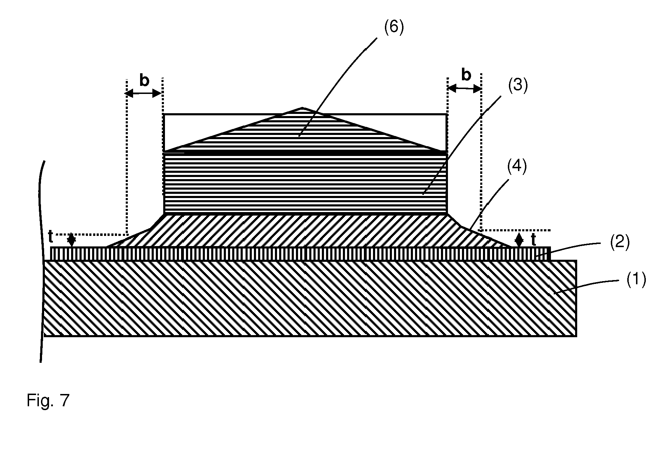

Fig. 6 und Fig. 7 zeigen eine weitere Ausgestaltung der erfindungsgemäßen Scheibe 1 mit Anschlusselement 3 in Brückenform. Das Anschlusselement 3 enthielt eine eisenhaltige Legierung mit einem thermischen Ausdehnungskoeffizienten von 8 x 10⁻⁶/°C. Die Materialdicke betrug 2 mm. Im Bereich der Kontaktfläche des Anschlusselementes 3 mit der Scheibe 1 waren hutförmige Ausgleichskörper 6 mit einer Eisen Nickel Kobalt Legierung aufgebracht. Die maximale Schichtdicke der hutförmigen Ausgleichskörper 6 betrug 4 mm. Durch die Ausgleichskörper konnten die thermischen Ausdehnungskoeffizienten des Anschlusselementes 3 den Erfordernissen der Scheibe 1 und der Lotmasse 4 angepasst werden. Die hutförmigen Ausgleichskörper 6 führten zu einem verbesserten Wärmefluss während der Herstellung der Lotverbindung 4. Die Erwärmung erfolgte vor allem im Zentrum der Kontaktfläche. Die Austrittsbreite b der Lotmasse 4 konnte weiter reduziert werden. Aufgrund der geringen Austrittsbreite b von < 1 mm und des angepassten Ausdehnungskoeffizienten konnten die thermischen Spannungen in der Scheibe 1 weiter reduziert werden. Die thermischen Spannungen in der Scheibe 1 waren unkritisch und es wurde eine dauerhafte elektrische und mechanische Verbindung zwischen dem Anschlusselement 3 und der Scheibe 1 über die elektrisch leitfähige Struktur 2 bereitgestellt.

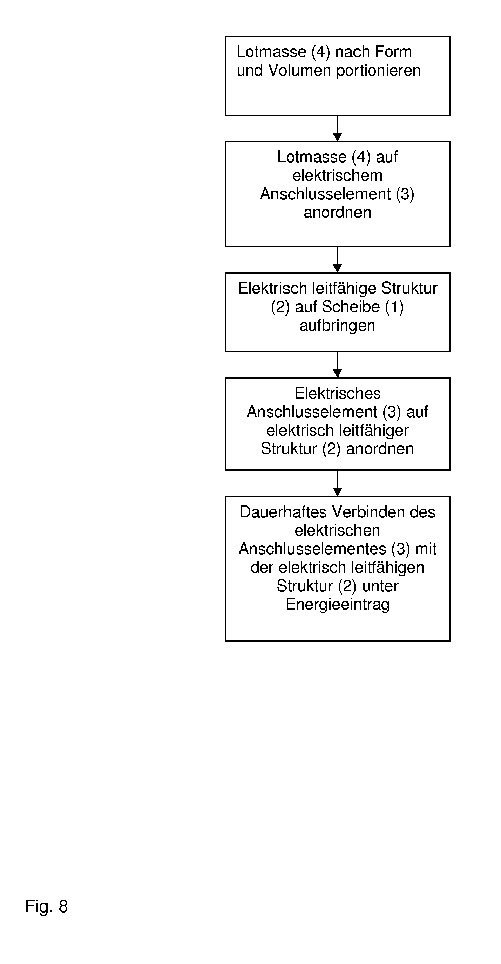

Fig. 8 zeigt detailliert ein erfindungsgemäßes Verfahren zur Herstellung einer Scheibe 1 mit elektrischem Anschlusselement 3. Dort wird ein Beispiel für das erfindungsgemäße Verfahren zur Herstellung einer Scheibe mit einem elektrischen Anschlusselement 3 dargestellt. Als erster Schritt war es notwendig die Lotmasse 4 nach Form und Volumen zu portionieren. Die portionierte Lotmasse 4 wurde auf dem elektrischen Anschlusselement 3 angeordnet. Das elektrische Anschlusselement 3 wurde mit der Lotmasse 3 auf der elektrisch leitfähigen Struktur 2 angeordnet. Es erfolgte eine dauerhafte Verbindung des elektrischen Anschlusselementes 3 mit der elektrisch leitfähigen Struktur 2 und dadurch mit der Scheibe 1 unter Energieeintrag.

### Beispiel

Testproben wurden angefertigt mit der Scheibe 1 (Dicke 3 mm, Breite 150 cm und Höhe 80 cm) der elektrisch leitfähige Struktur 2 in Form einer Heizleiterstruktur, dem elektrischen Anschlusselement 3, der Silberschicht auf den Kontaktflächen des Anschlusselements 3 und der Lotmasse 4. Die Lotmasse 4 wurde vorher als Plättchen mit festgelegter Schichtdicke, Volumen und Form auf der Kontaktfläche des Anschlusselements 3 aufgebracht. Das Anschlusselement 3 wurde mit der angebrachten Lotmasse auf der elektrisch leitfähigen Struktur 2 angebracht. Das Anschlusselement wurde bei einer Temperatur von 200 °C und einer Behandlungsdauer von 2 Sekunden auf der elektrisch leitfähigen Struktur 2 angelötet. Ein Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde nur auf einer maximalen Austrittsbreite von b = 0,5 mm beobachtet. Die Ausmaße und Zusammensetzungen der elektrisch leitfähige Struktur 2, dem elektrischen Anschlusselement 3, der Silberschicht auf den Kontaktflächen des Anschlusselements 3 und der Lotmasse 4 gehen aus der Tabelle 1 und der Figuren 1 und 2 und der Figurenbeschreibung hervor.

Bei sämtlichen Proben konnte bei einem Temperaturunterschied von +80 °C auf -30 °C beobachtet werden, dass kein Glassubstrat 1 brach oder Schäden aufwies. Es konnte gezeigt werden, dass kurz nach dem Anlöten diese Scheiben 1 mit angelöteten Anschlusselement 3 gegen plötzlichen Temperaturabfall stabil waren.

**Tabelle 1**

| Bestandteile | Material | Beispiel |
|---|---|---|
| Anschlusselement | | |
| | Eisen | 54 |
| | Nickel | 29 |
| | Kobalt | 17 |
| | CTE (coefficient of thermal expansion) x 10⁻⁶ (0 °C - 100 °C) | 5,1 |
| | Differenz zwischen CTE Anschlusselement und Substrat x 10⁻⁶/°C (0 °C - 100 °C) | 3,2 |
| | Dicke des Anschlusselements (m) | 8,0 x 10⁻⁴ |
| Lötbare Schicht | | |
| | Silber | 100 |
| | Dicke der Schicht (m) | 7,0 x 10⁻⁶ |
| Lotschicht | | |
| | Zinn | 40 |
| | Wismut | 57 |
| | Silber | 3 |
| | Dicke der Lotschicht in (m) | 250 x 10⁻⁶ |
| | Die Dicke der lötbaren Schicht und der Lotschicht (m) | 255 x 10⁻⁶ |
| Glas Substrat | | |
| (Natron-Kalk-Glas) | | |
| | CTE x 10⁻⁶ (0 °C ― 320 °C) | 8,3 |

### Vergleichsbeispiel 1

Das Vergleichsbeispiel 1 wurde genauso durchgeführt wie das Beispiel mit den folgenden Unterschieden. Die Ausmaße und Bestandteile der elektrisch leitfähigen Struktur 2, dem elektrischen Anschlusselement 3, der Metallschicht auf den Kontaktflächen des Anschlusselements 3 und der Lotmasse 4 gehen aus der Tabelle 2 hervor. Die Lotmasse 4 wurde nach dem Stand der Technik nicht vorher als Plättchen auf der Kontaktfläche des Anschlusselements 3 angebracht. Das Anschlusselement 3 wurde mit der elektrisch leitfähigen Struktur 2 nach dem herkömmlichen Verfahren verlötet. Beim Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde eine durchschnittliche Austrittsbreite b = 2 mm bis 3 mm erhalten.

Bei einem plötzlichen Temperaturunterschied von +80 °C auf -30 °C wurde beobachtet, dass die Glassubstrate 1 kurz nach dem Anlöten überwiegend Schäden aufwiesen.

**Tabelle 2**

| Bestandteile | Material | Vergleichs-Beispiel 1 |
|---|---|---|
| Anschlusselement | | |
| | Titan | 100 |
| | CTE (coefficient of thermal expansion) x 10⁻⁶ (0 °C - 100 °C) | 8,80 |
| | Differenz zwischen CTE des Anschlusselements und des Substrats x 10⁻⁶/°C (0 °C - 100 °C) | 0,5 |
| | Dicke des Anschlusselements (m) | 8,0 x 10⁻⁴ |
| Lötbare Schicht | | |
| | Silber | 100 |
| | Dicke der Schicht (m) | 7,0 x 10⁻⁶ |
| Lotschicht | | |
| | Zinn | 48 |
| | Wismut | 46 |
| | Silber | 2 |
| | Kupfer | 4 |
| | Dicke der Lotschicht in (m) | 50-200 x 10⁻⁶ |
| | Die Dicke der lötbaren Schicht und der Lotschicht (m) | 55-205 x 10⁻⁶ |
| Glas Substrat | | |
| (Natron-Kalk-Glas) | | |
| | CTE x 10⁻⁶ (0 °C ― 320 °C) | 8,3 |

### Vergleichsbeispiel 2

Das Vergleichsbeispiel 2 wurde genauso durchgeführt wie das Beispiel mit den folgenden Unterschieden. Die Ausmaße und Bestandteile der elektrisch leitfähigen Struktur 2, dem elektrischen Anschlusselement 3, der Metallschicht auf den Kontaktflächen des Anschlusselements 3 und der Lotmasse 4 gehen aus der Tabelle 3 hervor. Die Lotmasse 4 wurde nach dem Stand der Technik nicht vorher als Plättchen auf der Kontaktfläche des Anschlusselements 3 angebracht. Das Anschlusselement 3 wurde mit der elektrisch leitfähigen Struktur 2 nach dem herkömmlichen Verfahren verlötet. Beim Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde eine durchschnittliche Austrittsbreite b = 1 mm bis 1,5 mm erhalten.

Bei einem plötzlichen Temperaturunterschied von +80 °C auf -30 °C wurde beobachtet, dass die Glassubstrate 1 kurz nach dem Anlöten überwiegend Schäden aufwiesen.

**Tabelle 3**

| Bestandteile | Material | Vergleichs-Beispiel 2 |
|---|---|---|
| Anschlusselement | | |
| | Kupfer | 100 |
| | CTE (coefficient of thermal expansion) x 10⁻⁶ (0 °C ― 100 °C) | 16 |
| | Differenz zwischen CTE des Anschlusselements und des Substrats x 10⁻⁶/°C (0 °C - 100 °C) | 7,7 |
| | Dicke des Anschlusselements (m) | 8,0 x 10⁻⁴ |
| Lötbare Schicht | | |
| | Silber | 100 |
| | Dicke der Schicht (m) | 7,0 x 10⁻⁶ |
| Lotschicht | | |
| | Zinn | 71,5 |
| | Indium | 24 |
| | Silber | 2,5 |
| | Wismut | 1,5 |
| | Kupfer | 0,5 |
| | Dicke der Lotschicht in (m) | 50-200 x 10⁻⁶ |
| | Die Dicke der lötbaren Schicht und der Lotschicht (m) | 55-205 x 10⁻⁶ |
| Glas Substrat | | |
| (Natron-Kalk-Glas) | | |
| | CTE x 10⁻⁶ (0 °C ― 320 °C) | 8,3 |

Es hat sich gezeigt, dass erfindungsgemäße Scheiben mit Glassubstraten 1 und erfindungsgemäßen elektrischen Anschlusselementen 3 eine bessere Stabilität gegen plötzliche Temperaturunterschiede aufwiesen. Dieses Ergebnis war für den Fachmann unerwartet und überraschend.

### Bezugszeichenliste

(1) Scheibe / Glas
(2) Elektrisch leitfähige Struktur / Ag-Siebdruck
(3) Elektrisches Anschlusselement / Fe-Ni Legierung Kovar
(4) Lotmasse (Bi40Sn57Ag3)
(5) Benetzungsschicht / Ag-Beschichtung
(6) Ausgleichskörper
b maximale Austrittsbreite der Lotmasse
t Grenzdicke der Lotmasse
   - A-A': Schnittlinie
   - B-B': Schnittlinie

## Patentansprüche

1. Eine Scheibe mit einem elektrischen Anschlusselement, umfassend:
- ein Substrat aus Glas (1) mit einem ersten thermischen Ausdehnungskoeffizienten,
- eine elektrisch leitfähige Struktur (2) mit einer Schichtdicke von 5 µm bis 40 µm auf einem Bereich des Substrats (1),
- ein Anschlusselement (3) mit einem zweiten thermischen Ausdehnungskoeffizienten, wobei die Differenz zwischen dem ersten und dem zweiten Ausdehnungskoeffizienten < 5 x 10⁻⁶/°C ist und
- eine Schicht einer Lotmasse (4), die das Anschlusselement (3) mit Teilbereichen der elektrisch leitfähigen Struktur (2) elektrisch verbindet, wobei die Lotmasse (4) mit einer Austrittsbreite b von < 1 mm aus dem Zwischenraum zwischen dem Anschlusselement (3) und der elektrisch leitfähiger Struktur (2) austritt.

2. Scheibe nach Anspruch 1, wobei die maximale Austrittsbreite b bevorzugt kleiner 0,5 mm und insbesondere etwa 0 mm ist.

3. Eine Scheibe mit einem elektrischen Anschlusselement, umfassend:
- ein Substrat aus Glas (1) mit einem ersten thermischen Ausdehnungskoeffizienten,
- eine elektrisch leitfähige Struktur (2) mit einer Schichtdicke von 5 µm bis 40 µm auf einem Bereich des Substrats (1),
- ein Anschlusselement (3) mit einem zweiten thermischen Ausdehnungskoeffizienten, wobei die Differenz zwischen dem ersten und dem zweiten Ausdehnungskoeffizienten ≥ 5 x 10⁻⁶/°C ist und
- eine Schicht einer Lotmasse (4), die das Anschlusselement (3) mit Teilbereichen der elektrisch leitfähigen Struktur (2) elektrisch verbindet.

4. Scheibe nach Anspruch 3, wobei der thermische Ausdehnungskoeffizient des Anschlusselements (3) ≤ 4 x 10⁻⁶/°C beträgt.

5. Scheibe nach einem der Ansprüche 1 bis 4, wobei die maximale Austrittsbreite b in den vom elektrischen Anschlusselement (3) und der elektrisch leitfähigen Struktur (2) gebildeten Zwischenraum in einem konkaven Meniskus zurückgezogen ist.

6. Scheibe nach einem der Ansprüche 1 bis 5, wobei die elektrisch leitfähige Struktur (2) eine Schichtdicke von 8 µm bis 15 µm aufweist.

7. Scheibe nach einem der Ansprüche 1 bis 6, wobei die elektrisch leitfähige Struktur (2) Silber enthält.

8. Scheibe nach einem der Ansprüche 1 bis 7, wobei die Schichtdicke des Lots (4) < 3.0 x 10⁻⁴ m ist.

9. Scheibe nach einem der Ansprüche 1 bis 8, wobei die Lotmasse (4) Zinn und Wismut, Indium, Zink, Kupfer, Silber oder Zusammensetzungen davon enthält.

10. Scheibe nach Anspruch 9, wobei der Anteil an Zinn in der Lotzusammensetzung (4) 3 Gew.-% bis 99,5 Gew.-% beträgt.

11. Scheibe nach Anspruch 9 oder 10, wobei der Anteil von Wismut, Indium, Zink, Kupfer, Silber oder Zusammensetzungen davon in der Lotzusammensetzung (4) 0,5 Gew.-% bis 97 Gew.-% beträgt.

12. Scheibe nach einem der Ansprüche 1 bis 11, wobei das Anschlusselement (3) zumindest 50 Gew.-% bis 75 Gew.-% Eisen, 25 Gew.-% bis 50 Gew.-% Nickel, 0 Gew.-% bis 20 Gew.-% Kobalt, 0 Gew.-% bis 1,5 Gew.-% Magnesium, 0 Gew.-% bis 1 Gew.-% Silizium, 0 Gew.-% bis 1 Gew.-% Kohlenstoff oder 0 Gew.-% bis 1 Gew.-% Mangan enthält.

13. Scheibe nach Anspruch 12, wobei das Anschlusselement (3) zumindest 55 Gew.-% bis 70 Gew.-% Eisen, 30 Gew.-% bis 45 Gew.-% Nickel, 0 Gew.-% bis 5 Gew.-% Kobalt, 0 Gew.-% bis 1 Gew.-% Magnesium, 0 Gew.-% bis 1 Gew.-% Silizium oder 0 Gew.-% bis 1 Gew.-% Kohlenstoff enthält.

14. Scheibe nach Anspruch 12, wobei das Anschlusselement (3) zumindest 50 Gew.-% bis 60 Gew.-% Eisen, 25 Gew.-% bis 35 Gew.-% Nickel, 15 Gew.-% bis 20 Gew.-% Kobalt, 0 Gew.-% bis 0,5 Gew.-% Silizium, 0 Gew.-% bis 0,1 Gew.-% Kohlenstoff oder 0 Gew.-% bis 0,5 Gew.-% Mangan enthält.

15. Scheibe nach einem der Ansprüche 1 bis 14, wobei das Anschlusselement (3) mit Nickel, Zinn, Kupfer und / oder Silber beschichtet ist.

16. Scheibe nach Anspruch 15, wobei das Anschlusselement (3) mit 0,1 µm bis 0,3 µm Nickel und / oder 3 µm bis 10 µm Silber beschichtet ist.

17. Verfahren zur Herstellung einer Scheibe mit einem elektrischen Anschlusselement (3), wobei
a) Lotmasse (4) auf dem Anschlusselement (3) als Plättchen mit festgelegter Schichtdicke, Volumen, Form und Anordnung angeordnet und aufgebracht wird,
b) Elektrisch leitfähige Struktur (2) auf einem Substrat (1) aufgebracht wird,
c) das Anschlusselement (3) mit der Lotmasse (4) auf der elektrisch leitfähigen Struktur (2) anordnet wird und
d) das Anschlusselement (3) mit der elektrisch leitfähigen Struktur (2) verlötet wird.
